# EUROPÄISCHE PATENTSCHRIFT

(11) **EP 2 552 661 B1**
(45) Veröffentlichungstag und Bekanntmachung des Hinweises auf die Patenterteilung: **30.09.2015**
(21) Anmeldenummer: 11711083.3
(22) Anmeldetag: 28.03.2011
(51) Int. Cl.: B29C 70/46, B29C 31/08, B29C 33/48, B29L 31/30

(54) **EINRICHTUNG UND VERFAHREN ZUR HERSTELLUNG ZWEIDIMENSIONAL GEWÖLBTER STRUKTURBAUTEILE AUS EINEM FASERVERBUNDWERKSTOFF**
INSTALLATION AND METHOD FOR PRODUCING TWO-DIMENSIONALLY CURVED STRUCTURAL COMPONENTS FROM A FIBER COMPOSITE MATERIAL
DISPOSITIF ET PROCÉDÉ DE PRODUCTION D'ÉLÉMENTS STRUCTURELS D'INCURVATION BIDIMENSIONNELLE, RÉALISÉES EN COMPOSITE RENFORCÉ AUX FIBRES

(30) Priorität: 30.03.2010 US 318898 P; 30.03.2010 DE 102010013479
(43) Veröffentlichungstag der Anmeldung: 06.02.2013
(73) Patentinhaber: Airbus Operations GmbH, 21129 Hamburg (DE)
(72) Erfinder: LONSDORFER, Georg, 21282 Stade (DE); HINZ, Remo, 21682 Stade (DE); WACHENDORF, Adrian, 31199 Söhre (DE); DESCHAUER, Niels, 79100 Freiburg (DE); ANDRÄ, Adam, 79102 Freiburg (DE)
(74) Vertreter: Maiwald Patentanwalts GmbH
(86) Internationale Anmeldenummer: PCT/EP2011/054720
(87) Internationale Veröffentlichungsnummer: WO 2011/124492

(56) Entgegenhaltungen:
- DE-A1- 10 230 270
- DE-C1- 3 605 256
- US-A- 5 217 669

## Beschreibung

### GEBIET DER ERFINDUNG

Die vorliegende Erfindung betrifft eine Einrichtung sowie ein Verfahren zur Herstellung großflächig zweidimensional gewölbter Strukturbauteile aus einem Faserverbundwerkstoff, umfassend eine Aufrüstvorrichtung mit nach außen gewölbter Montageschale, welche elastisch randseitig nach Innen verformbar ist und über mehrere innseitig angelenkte Aktuatoren zwischen einer ausgefahrenen Stellung und mindestens einer eingefahrenen Stellung bewegbar ist, wobei ferner die Montageschale Aufnahmekanäle zum Einlegen von Bauteilkomponenten aufweist und mit Hilfsstoffen belegbar ist, wobei die belegte Aufrüstvorrichtung mit einer korrespondierend hierzu geformten Laminierklebevorrichtung zum Ausformen des Strukturbauteils unter Druck zusammenwirken kann.

Das Einsatzgebiet der vorliegenden Erfindung erstreckt sich vornehmlich auf den Flugzeugbau. Insbesondere Verkehrs- oder Transportflugzeuge mit großvolumigen Rümpfen können in Schalenbauweise - insbesondere Halbschalenbauweise - gefertigt werden. Unter Halbschalenbauweise wird im Flugzeugbau der Aufbau des Rumpfes in meist zwei Schalen verstanden. Zusammengefügt ergeben die beiden Schalen einen nahezu runden oder ovalen Querschnitt eines Rumpfabschnittes. Mehrere Rumpfabschnitte - für Heck, Rumpfmitte und Cockpitsektion hintereinander - ergeben den gesamten Flugzeugrumpf. Vermehrt kommen zur Herstellung von Flugzeugrümpfen geeignete Faserverbundwerkstoffe, wie glasfaseroder kohlefaserverstärkt Kunststoffe, zum Einsatz. Um den Rumpf zu versteifen und die Lasten aufnehmen zu können, werden die Schalen üblicherweise mit Versteifungsstreben ausgerüstet, insbesondere Stringern und Spanten.

Bei dem hier interessierenden Fertigungsprinzip wird das im Wesentlichen zweidimensional geformte schalenförmige Strukturbauteil in einer Negativklebeform, einer sogenannten Laminierklebevorrichtung (LKV) produziert, indem dort Fasermaterial und Harz in verschiedenen Schichten eingebracht und ausgehärtet werden. Die LKV wirkt dabei mit einer Aufrüstvorrichtung (ARV) zusammen, welche der Vorbereitung des Schichtaufbaus nebst Positionierung der in den Schichtaufbau eingeklebten Stringern und dergleichen dient. Letztlich gibt die LKV die entsprechende Außenkontur vor und sorgt für eine glatte Außenoberfläche des schalenförmigen Strukturbauteils.

### HINTERGRUND DER ERFINDUNG

Aus der DE 103 31 358 A1 geht eine Vorrichtung der vorstehend geschilderten Art hervor, die im Prinzip aus einer LKV und einer hiermit korrespondierenden ARV besteht. Die ARV umfasst im Wesentlichen einen ebenen Basisträger, an dem ein Raster von mehreren Stützwänden unterschiedlicher Länge derart befestigt ist, dass deren distale Enden über jeweils hieran befestigte modulare Profilteile eine nach außen gewölbte Montagefläche bilden, wobei Zwischenräume dem Einlegen von Stringern und anderer Bauteilkomponenten mit Hilfsstoffen für das Strukturbauteil dienen. Die gewölbte Montagefläche entspricht dabei im Wesentlichen der Innenkontur des herzustellenden integralen Strukturbauteils im Negativ. Der Spalt zwischen einander benachbarten modularen Profilteile ist jeweils unter der Position eines Stringers angeordnet. Eine passende LKV wird nach Erstellen des kompletten Aufbaus des Strukturbauteils und der Hilfsstoffe auf der ARV oberhalb dieser passgenau positioniert, um das Strukturbauteil letztlich auszuformen.

Zu Beginn des Herstellungsprozesses wird zunächst die Montagefläche der ARV mit einer Folie abgedeckt. Der durch die Aufnahmekanäle gebildete Hohlraum wird mit einem Vakuum derart beaufschlagt, dass die Folie glatt auf die Montagefläche gesaugt wird. Danach wird eine Rolle der Folie mit einer Rolle einer Vakuumhaut derart gekoppelt, dass die Folie aufgerollt und die Vakuumhaut auf die gewölbte Montagefläche abgerollt und formtreu in die Aufnahmekanäle der Stringer eingezogen wird. In die von der Vakuumhaut bedeckten Aufnahmekanäle werden anschließend mit Stützelementen versehende Stringer eingelegt. Anschließend werden auf die von der Vakuumhaut bedeckten äußeren Oberflächenbereiche der modularen Profile und der Stringer alle Hautschichten aus Faserverbundwerkstoffen aufgelegt. Auf die äußerste Hautschicht wird die Siegelmasse in optimierter Menge aufgetragen und anschließend wird eine um 180° gedrehte LKV passgenau aufgelegt, welche die umlaufende Siegelmasse derart verdichtet, dass eine vakuumdichte Siegelung zwischen der Vakuumhaut und der LKV entsteht sowie die Kavitäten zwischen der Vakuumhaut und der LKV evakuiert werden. Nach Erreichen des vorgesehenen Prozessvakuums zwischen der Außenhaut und der LKV wird das Vakuum in dem durch die Zwischenräume gebildeten Hohlraum abgeschaltet, sowie zur Atmosphäre hin geöffnet. Die LKV mit dem hierin nach Übergabe von der ARV angeordneten Strukturbauteil wird anschließend angehoben, um 180° gedreht und einem nachfolgenden Injektions- und Härtungsprozess zugeführt.

Beim Trennen der LKV von der ARV tritt durch Wölbung des Strukturbauteils in Verbindung mit den innenseitig längs verlaufenden Stringern gegenüber den zugeordneten Aufnahmekanälen an der ARV eine sogenannte Hinterschnittproblematik auf, welche je nach Wölbungsgrad des Strukturbauteils aufgrund eines hinderlichen Formschlusses ein Entformen erschweren könnte. Daher wird bei diesem Stand der Technik vorgeschlagen, die Aufnahmekanäle für die Stringer seitens der ARV so zu gestalten, dass sich zur Vertikalen keine Hinterschneidungen ergeben. Nachteilhaft hierbei ist jedoch, dass der Wölbungsgrad des Strukturbauteils stark beschränkt ist von der Machbarkeit einer Entformung aufgrund der Hinterschnittproblematik. Denn durch die Hinterschnittproblematik kann bei herkömmlichen ARV ab einer bestimmten Schalenwölbung nach Übergabe der Stringer auf eine in der LKV liegende Haut nicht mehr aus der LKV gefahren werden, ohne dabei mit den Stringern zu kollidieren.

Zur Lösung dieses Problems ist es bereits versucht worden, Teile der die gewölbte Montagefläche der ARV bildenden modularen Profile in Radialrichtung verschiebbar auszubilden, um durch Einfahren der im Hinterschneidungsbereich gelegenen modularen Profile die dort bestehenden Hinterschnitte zu überwinden. Allerdings verursacht diese technische Lösung einen erheblichen Aufwand zur Realisierung der Bewegbarkeit der betreffenden einzelnen modularen Profile der gewölbten Montagefläche, welche sich gewöhnlich im Randbereich derselben befinden.

Ferner geht aus der DE 102 30 270 A1 ein flexibles System zur Herstellung von Konstruktionen, insbesondere zur Ausführung von Arbeiten an gewölbten Laminarblechen hervor. Dieses beinhaltet eine Einheit ausfahrbarer Elemente, die sich in Anpassung an die Wölbung des Anwendungsbleches positionieren lassen. Diese Elemente weisen am Ende dazugehörige Halterungen auf, an denen ein Profil aus Kohlenstoff-Fasern angebracht wird. Dieses wird gezwungen die Wölbung des Anwendungsbleches anzunehmen, um eine fortlaufende Querauflage zur Aufnahme des Bleches zu bilden. In gegenüberliegender Position ist eine weitere Einheit ausfahrbarer Elemente angeordnet, an denen ein weiteres Profil aus Kohlenstoff-Fasern angebracht wird, das sich einer entsprechenden Wölbung anpasst, jedoch entgegengesetzt zum ersten Profil. Am zweiten Profil werden funktionale Betätigungselemente für die an den Anwendungsblechen auszuführenden Bearbeitungsvorgänge angebracht. Die Betätigungselemente sind über den gesamten Umfang des zweiten Profils verteilt.

Darüber hinaus geht aus der US 5 217 669 A eine aus einem Faserverbundwerkstoff mit Elastomermatrix bestehende Montageschale hervor. Aktuatoren sind in einem Bereich, der deutlich vom Randbereich der Montageschale beabstandet ist, angelenkt.

Es ist daher die Aufgabe der vorliegenden Erfindung eine Einrichtung zur Herstellung großflächig zweidimensional gewölbter Strukturbauteile zu schaffen, welche mit einfachen technischen Mitteln eine effiziente Automatisierung gestattet.

### ZUSAMMENFASSUNG DER ERFINDUNG

Die Aufgabe wird ausgehend von einer Einrichtung gemäß dem Oberbegriff von Anspruch 1 in Verbindung mit dessen kennzeichnenden Merkmalen gelöst. Verfahrenstechnisch wird die Aufgabe durch die Merkmale von Anspruch 7 gelöst. Die jeweils rückbezogenen abhängigen Ansprüche geben vorteilhafte Weiterbildungen der Erfindung wieder.

Die Erfindung schließt die technische Lehre ein, dass die innenseitig an der Montageschale angelenkten Aktuatoren zueinander beabstandet entlang beider einander gegenüberliegender Randbereiche der Montageschale zur Realisierung einer wirksamen Verformung der Montageschale angeordnet sind, wobei die Montageschale aus einem einstückig gebogenem Metallblech besteht.

Mit anderen Worten ist die erfindungsgemäße ARV in der Lage, durch flexible Verformung ihrer gewölbten Montagefläche die Hinterschnittproblematik, insbesondere hinsichtlich der Stringerintegration in das Strukturbauteil, für zweidimensional gewölbte Schalen zu lösen. Außer den Stringern dann die ARV auch mit anderen Bauteilkomponenten, wie Fensterrahmen, Türrahmen und dergleichen, bestückt werden. Als Hilfsstoffe können unter anderem Trennfolien, Vakuumfolien, Absauggewebe zum Einsatz kommen.

Der Vorteil der erfindungsgemäßen Lösung liegt insbesondere darin, dass sich die verformbare Montageschale aus einem einzigen plattenartigen Teil herstellen lässt und sich aufgrund der Materialelastizität derart geeignet elastisch verformen lässt, dass eine hinterschneidungsfreie Trennung der ARV von der LKV möglich ist. Durch eine solche verformbare Montageschale lässt sich auch das Gewicht der ARV insgesamt reduzieren. Die zur Bewegung der Montageschale zwischen den beiden Stellungen vorgesehenen Aktuatoren bilden zudem eine einfache Mechanik. Die äußeren geometrischen Abmessungen der ARV lassen sich zu Lager- und Transportzwecken dadurch reduzieren, indem die Montageschale in die eingefahrene Stellung B gebracht wird.

Dadurch, dass die innenseitig an der Montageschale angelenkten Aktuatoren zueinander beabstandet entlang beider einander gegenüberliegender Randbereiche der Montageschale angeordnet sind, entsteht eine besonders einfach ausgebildete Mechanik, um den erfindungsgemäßen Zweck der Verfahrbarkeit zwischen ausgefahrenen Stellung A und der eingefahrenen Stellung B zu bewirken. Zudem sollten die Aktuatoren vorzugsweise in der Längserstreckung nach radial innen ausgerichtet sein und innenseitig an einer ortsfesten Trägerkonstruktion angelenkt sein. Hierdurch fällt die ARV besonders kompaktbauend aus, da keine wesentlichen über die geometrischen Abmessungen der gewölbten Montageschale hinausstehenden Bauteile existieren. Eine solche Trägerkonstruktion kann aus mehreren miteinander statisch sicher verbundenen Rahmenbalken bestehen.

Die Aktuatoren lassen sich - je nach zur Verfügung stehendem Betriebsmedium - beispielsweise als doppeltwirkende Pneumatikzylinder oder als elektrische Linearantriebe ausbilden.

Gemäß einer die Erfindung verbessernden Maßnahme wird vorgeschlagen, dass die längs verlaufenden Aufnahmekanäle für die Stringer vorzugsweise in die einstückige Montageschale eingeformt sind. Dadurch, dass die Montageschale aus einem Metallblech besteht, können diese Einformungen durch Biegen, also einer bereichsweise plastischen Umformung, erzeugt werden.

Da sich die hier offenbarte Lösung insbesondere zur Herstellung überwiegend zweidimensional geformter Strukturbauteile eignet, lässt sich mit einer erfindungsgemäßen Montageschale insbesondere die Form eines Zylindersegments realisieren, um beispielsweise in Längsrichtung gerade verlaufende Rumpfschalen als Strukturbauteile herzustellen.

Mit der vorstehend beschriebenen Einrichtung lässt sich ein großflächiges zweidimensional gewölbtes Strukturbauteil aus einem Faserverbundwerkstoff vorzugsweise dadurch herstellen, dass:
- die sich in der nach oben gewölbten Ausgangslage befindliche elastisch nach innen verformbare Montageschale der ARV mit Bauteilkomponenten, wie insbesondere Stringern, und Hilfsstoffen belegt wird,
- die belegte ARV anschließend evakuiert und gewendet wird, so dass diese in eine nach unten gewölbte Arbeitslage gelangt,
- die Montageschale der nun belegten und nach unten gewölbten ARV nach innen verformt wird und durch anschließendes Einfahren mit der korrespondierenden LKV zusammengebracht wird,
- worin die Montageschale der eingefahrenen ARV wieder nach außen verformt wird, um die Stringerübergabe an die LKV einzuleiten,
- wonach die elastische Montageschale der ARV wieder nach innen verformt wird, um die ARV hinterschneidungsfrei aus der LKV ausfahren zu können.

Voraussetzung für die Durchführung dieser Verfahrensschritte ist die erfindungsgemäß elastische randseitig nach innen verformbare Montageschale, welche im Prinzip eine steife Haut mit Aufnahmekanälen für die Stringer und anderen Bauteilkomponenten sowie den Hilfsstoffen bildet. Die ARV lässt sich durch Aufbringen von Kräften soweit verformen, dass sich die Montageschale ohne Kollision bis auf die in der LKV liegende Schalenhaut gefahren werden kann. Anschließend wird die Montageschale soweit wie notwendig zurückverformt, so dass die Stringer und die gegebenenfalls weiteren Bauteilkomponenten mit Hilfsstoffen übergeben werden können an die LKV. Schließlich wird die ARV wieder soweit in Innenrichtung verformt, dass die Montageschale ohne Kollision mit insbesondere den Stringern aus dem schalenförmig gewölbten Strukturbauteil gefahren werden kann.

### KURZE BESCHREIBUNG DER ZEICHNUNGEN

Weitere, die Erfindung bessernde Maßnahmen werden nachstehend gemeinsam mit der Beschreibung eines bevorzugten Ausführungsbeispiels der Einrichtung anhand der Figuren näher dargestellt. Es zeigt:
- Figur 1: eine schematische Seitenansicht eines Flugzeugs mit einem großvolumigen Rumpf, der aus einzelnen Rumpfschalen besteht,
- Figur 2: eine schematische Darstellung einer ARV mit verformbarer Montageschale,
- Figur 3: einen ersten Verfahrensschritt zur Herstellung eines gewölbten Strukturbauteils,
- Figur 4: einen zweiten Verfahrensschritt zur Herstellung eines gewölbten Strukturbauteils,
- Figur 5: einen dritten Verfahrensschritt zur Herstellung eines gewölbten Strukturbauteils, und
- Figur 6: einen vierten Verfahrensschritt zur Herstellung eines gewölbten Strukturbauteils.

### DETAILLIERTE BESCHREIBUNG BEISPIELHAFTER AUSFÜHRUNGSFORMEN

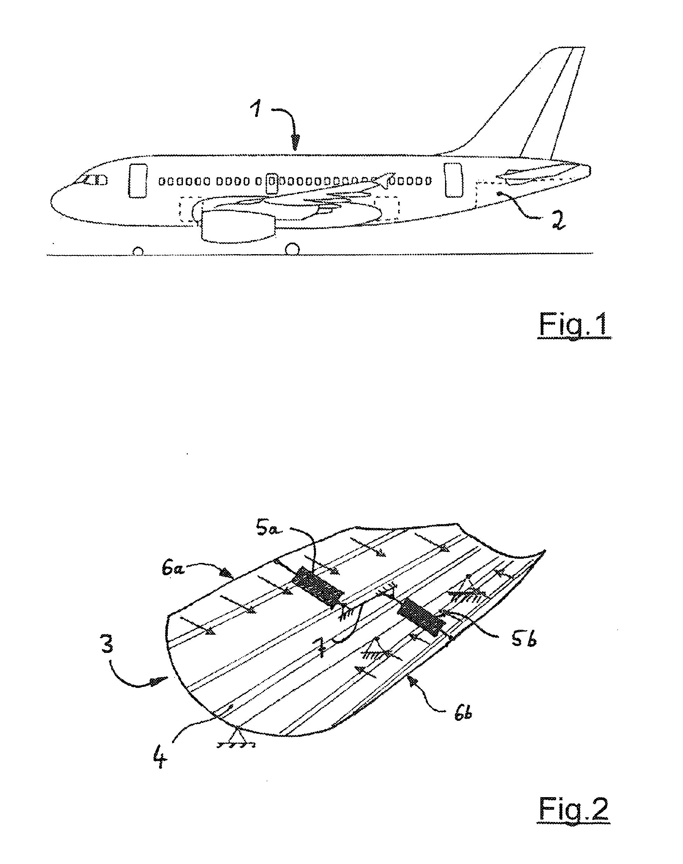

Gemäß Figur 1 besitzt das dargestellte Verkehrsflugzeug einen großvolumigen Rumpf 1, der in Schalenbauweise hergestellt auch eine hintere Rumpfschale 2 umfasst, die hier als ein im Wesentlichen zweidimensional gewölbtes Strukturbauteil ausgebildet ist.

Dieses Strukturbauteil wird nach Figur 2 mittels einer ARV hergestellt, welche eine nach außen gewölbte Montagefläche 3 aufweist. Außen über die Montagefläche 3 verlaufen mehrere beabstandet zueinander angeordnete Aufnahmekanäle 4 zum Einlegen von Stringern, die gemeinsam mit den auf die Montagefläche 3 aufzubringenden faserverstärkten Hilfsstoffe am Ende des Herstellungsprozesses das Strukturbauteil bilden.

Die Montageschale 3 lässt sich - durch die Pfeilreihen angedeutet - randseitig nach innen elastisch verformen. Hierzu sind mehrere innenseitig angelenkte Aktuatoren 5a, 5b (exemplarisch) vorgesehen, um die Montageschale 3 von der hier dargestellten ausgefahrenen Stellung in eine eingefahrene Stellung zu bewegen, in welcher ein hinterschneidungsfreies Zusammenwirken mit einer - nicht dargestellten - LKV möglich ist. Zur Realisierung einer wirksamen Verformung sind die Aktuatoren 5a und 5b (exemplarisch) in Reihenanordnung entlang beider gegenüberliegender Randbereiche 6a bzw. 6b der Montageschale 4 angelenkt. In ihrer Längserstreckung sind die Aktuatoren 5a, 5b nach in etwa radial innen ausgerichtet und dort an einer ortsfesten Trägerkonstruktion 7 befestigt.

Die Montageschale 3 besteht in diesem Ausführungsbeispiel aus einem einstückig gebogenem Metallblech und die Aktuatoren 5a, 5b sind Pneumatikzylinder, welche die im Wesentlichen zylindersegmentförmige Montageschale 3 von der dargestellten ausgefahrenen Stellung in eine nach radial innen verformte eingefahrene Stellung führen. Die Aufnahmekanäle 4 für die Stringer und ggf. anderer Bauteilkomponenten sind dabei direkt in die Montageschale 3 eingeformt.

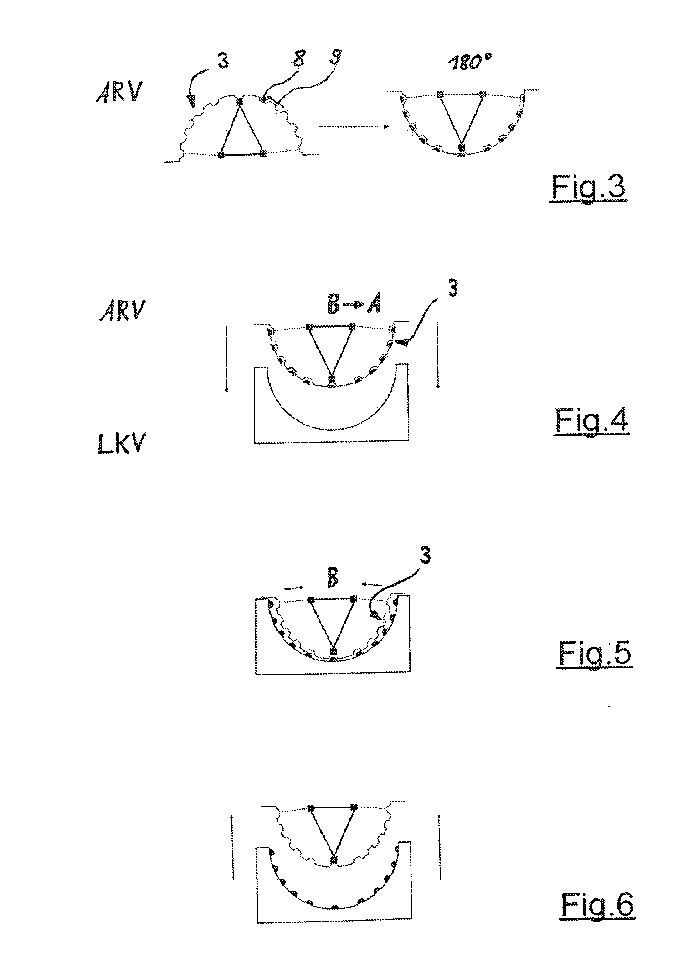

Nach Figur 3 wird zur Herstellung des großflächigen und im Wesentlichen zweidimensional gewölbten Strukturbauteils unter Zuhilfenahme der vorstehend beschriebenen ARV die sich in der nach oben gewölbten Ausgangslage befindliche Montageschale 3 mit Stringern 8 und Hilfsstoffen 9 in Form von Fasermatten belegt. Wie dargestellt wird die so belegte Montageschale 3 anschließend nach Evakuieren um 180° gewendet, so dass diese in eine nach unten gewölbte Arbeitslage gelangt. Durch das an sich bekannte Vakuumverfahren bleiben die Stringer 8 mit den Hilfsstoffen 9 an der Montageschale 3 haften.

Anschließend wird gemäß Figur 4 die Montageschale 3 der belegten und nach unten gewölbten ARV nach radial innen in die eingefahrene Stellung B verformt, um diese in eine unterhalb hiervon positionierte korrespondierende LKV einzufahren. Im eingefahrenen Zustand wird die ARV wieder in die ausgefahrene Stellung A überführt. Nun erfolgt die Stringerübergabe samt Hilfsstoffen an die LKV. Hierfür wird seitens der LKV Vakuum gezogen und es erfolgt eine Entlüftung seitens der ARV.

Nachfolgend wird gemäß Figur 5 die elastische Montageschale 3 der gewendeten ARV wieder nach innen verformt, bis diese in die eingefahrene Stellung B gelangt, um letztlich die ARV hinterschneidungsfrei wieder aus der LKV auszufahren, wie Figur 6 zeigt.

## Patentansprüche

1. Einrichtung zur Herstellung großflächig zweidimensional gewölbter Strukturbauteile aus einem Faserverbundwerkstoff, umfassend eine Aufrüstvorrichtung (ARV) mit nach außen gewölbter Montageschale (3), welche elastisch randseitig nach Innen verformbar ist und über mehrere innseitig angelenkte Aktuatoren (5 a, 5b) zwischen einer ausgefahrenen Stellung (A) und mindestens einer eingefahrenen Stellung (B) bewegbar ist, wobei ferner die Montageschale (3) Aufnahmekanäle (4) zum Einlegen von Bauteilkomponenten aufweist und mit Hilfsstoffen belegbar ist, wobei die belegte Aufrüstvorrichtung (ARV) mit einer korrespondierend hierzu geformten Laminierklebevorrichtung (LKV) zum Ausformen des Strukturbauteils unter Druck zusammenwirken kann,
**dadurch gekennzeichnet, dass** die innenseitig an der Montageschale (3) angelenkten Aktuatoren (5a, 5b) zueinander beabstandet entlang beider einander gegenüberliegender Randbereiche (6a, 6b) der Montageschale (3) zur Realisierung einer wirksamen Verformung der Montageschale (3) angeordnet sind, wobei die Montageschale (3) aus einem einstückig gebogenem Metallblech besteht.

2. Einrichtung nach Anspruch 1,
**dadurch gekennzeichnet, dass** die Aktuatoren (5a, 5b) in der Längserstreckung nach innen ausgerichtet sind und innenseitig an einer ortsfesten Trägerkonstruktion (7) angelenkt sind.

3. Einrichtung nach Anspruch 1,
**dadurch gekennzeichnet, dass** die Aktuatoren (5a, 5b) als Pneumatikzylinder oder als elektrische Linearantriebe ausgebildet sind.

4. Einrichtung nach Anspruch 1,
**dadurch gekennzeichnet, dass** die Montageschale (3) die Form eines Zylindersegments besitzt.

5. Einrichtung nach Anspruch 1,
**dadurch gekennzeichnet, dass** die längs verlaufenden Aufnahmekanäle (4) für die Stringer (8) in die Montageschale (3) eingeformt sind.

6. Einrichtung nach Anspruch 1,
**dadurch gekennzeichnet, dass** die Trägerkonstruktion (7) der Montageschale (3) aus mehreren Rahmenbalken besteht.

7. Verfahren zur Herstellung großflächig zweidimensional gewölbter Strukturbauteile aus einem Faserverbundwerkstoff mit einer Einrichtung nach einem der vorstehenden Ansprüche, **gekennzeichnet durch** die folgenden Verfahrensschritte:
- die Montageschale (3) der belegten und nach unten gewölbten Aufrüstvorrichtung (ARV) wird nach Radialinnen verformt und **durch** Einfahren mit der korrespondierenden Laminierklebevorrichtung (LKV) zusammengebracht,
- die Montageschale (3) der eingefahrenen Aufrüstvorrichtung (ARV) wird nach außen verformt, um die Übergabe der Bauteilkomponenten an die Laminierklebevorrichtung (LKV) einzuleiten,
- die elastische Montageschale (3) der eingefahrenen Aufrüstvorrichtung (ARV) wird nach innen verformt, um die Aufrüstvorrichtung (ARV) nach Übergabe der Bauteilkomponenten an die Laminierklebevorrichtung (LKV) hinterschneidungsfrei auszufahren.

8. Verfahren nach Anspruch 7,
**dadurch gekennzeichnet, dass**
- die sich in der nach oben gewölbten Ausgangslage befindliche Montageschale (3) der Aufrüstvorrichtung (ARV) zumindest mit als Stringern (8) ausgebildeten Bauteilkomponenten und Hilfsstoffen (9) belegt wird,
- die belegte Aufrüstvorrichtung (ARV) anschließend evakuiert und gewendet wird, so dass diese in eine nach unten gewölbte Arbeitslage gelangt.

## Claims

1. A device for the production of two-dimensionally arched large-area structural components from a fiber composite material, comprising a jig (ARV) having a convex mounting shell (3), which at the edge can be elastically deformed inwards, wherein the mounting shell (3) can be moved between an extended position (A) and at least one retracted position (B) by way of a plurality of actuators (5a, 5b) that are articulated to the inside, wherein the mounting shell (3) has receiving channels (4) for the insertion of construction components and which can be loaded with auxiliary materials, wherein the loaded jig (ARV) interacts with a laminating bonding device (LKV) having a corresponding shape for forming the structural component under pressure,
**characterized in that** the actuators (5a, 5b) that are articulated on the inside to the mounting shell (3) are arranged spaced apart from each other along both opposing edge regions (6a, 6b) of the mounting shell (3), wherein the mounting shell (3) is designed as an one piece metal sheet.

2. The device of claim 1,
**characterized in that** the longitudinal extension of the actuators (5a, 5b) is aligned so as to point inwards, and said actuators (5a, 5b) are articulated in the interior to a stationary supporting structure (7).

3. The device of claim 1,
**characterized in that** the actuators (5a, 5b) are designed as pneumatic cylinders or as linear electrical drives.

4. The device of claim 1,
**characterized in that** the mounting shell (3) is in the shape of a cylinder segment.

5. The device of claim 1,
**characterized in that** the longitudinally extending receiving channels (4) for the stringers (8) have been formed into the mounting shell (3).

6. The device of claim 1,
**characterized in that** the supporting structure (7) of the mounting shell (3) comprises a plurality of framework beams.

7. A method for the production of essentially two-dimensionally arched large-area structural components from a fiber composite material with a device of any one of the preceding claims, **characterized by** the following method-related steps:
- the mounting shell (3) of the loaded and downwards-arched jig (ARV) is deformed radially inwards and is brought together with the corresponding laminating bonding device (LKV) by being retracted,
- the mounting shell (3) of the retracted jig (ARV) is deformed towards the outside in order to initiate the transfer of the construction components to the laminating bonding device (LKV),
- the elastic mounting shell (3) of the retracted jig (ARV) is deformed towards the interior in order to, after transfer of the construction components to the laminating bonding device (LKV), extend the jig (ARV) without undercuts.

8. The method of claim 7,
**characterized in that**
- the mounting shell (3) of the jig (ARV), which mounting shell (3) is in its upwards-arched home position, is loaded at least with construction components that are designed as stringers (8) and with auxiliary materials (9),
- the loaded jig (ARV) is then evacuated and turned over so that it attains a downwards-arched operating position.

## Revendications

1. Dispositif de production d'éléments structurels d'incurvation bidimensionnelle sur une grande surface, réalisés en matériau composite renforcé de fibres, comprenant un équipement de préparation (ARV) avec une coque de montage (3) incurvée vers l'extérieur, qui est déformable élastiquement vers l'intérieur sur ses bords et déplaçable par le biais de plusieurs actionneurs (5a, 5b) articulés à l'intérieur entre une position sortie (A) et au moins une position rentrée (B), la coque de montage (3) présentant en outre des canaux de réception (4) pour mettre en place des composants de l'élément structurel et pouvant être garnie d'adjuvants, l'équipement de préparation garni (ARV) pouvant coopérer avec un équipement de collage-laminage (LKV) moulé de manière correspondante à celui-ci pour former l'élément structurel sous pression,
**caractérisé en ce que** les actionneurs (5a, 5b) articulés à l'intérieur sur la coque de montage (3) sont disposés à distance l'un de l'autre le long des deux bords (6a, 6b) de la coque de montage (3) opposés l'un par rapport à l'autre, pour réaliser une déformation efficace de la coque de montage (3), la coque de montage (3) étant composée d'une tôle courbée réalisée d'un seul tenant.

2. Dispositif selon la revendication 1,
**caractérisé en ce que** les actionneurs (5a, 5b) sont orientés vers l'intérieur dans la direction longitudinale et sont articulés à l'intérieur sur une construction porteuse (7) fixe.

3. Dispositif selon la revendication 1,
**caractérisé en ce que** les actionneurs (5a, 5b) sont réalisés sous la forme de vérins pneumatiques ou sous la forme d'entraînements linéaires électriques.

4. Dispositif selon la revendication 1,
**caractérisé en ce que** la coque de montage (3) présente la forme d'un segment cylindrique.

5. Dispositif selon la revendication 1,
**caractérisé en ce que** les canaux de réception (4) s'étendant longitudinalement sont moulés dans la coque de montage (3) pour les lisses (8).

6. Dispositif selon la revendication 1,
**caractérisé en ce que** la construction porteuse (7) de la coque de montage (3) est composée de plusieurs poutres de cadre.

7. Procédé de production d'éléments structurels d'incurvation bidimensionnelle sur une grande surface, réalisés en matériau composite renforcé de fibres, comprenant un dispositif selon une des revendications précédentes, procédé **caractérisé par** les étapes suivantes :
- la coque de montage (3) de l'équipement de préparation (ARV) garni et incurvé vers le bas est déformée radialement vers l'intérieur et s'assemble, lorsque celui-ci est rentré, avec l'équipement de collage-laminage correspondant (LKV),
- la coque de montage (3) de l'équipement de préparation rentré (ARV) est déformée vers l'extérieur pour démarrer le transfert des composants de l'élément vers l'équipement de collage-laminage (LKV),
- la coque de montage élastique (3) de l'équipement de préparation rentré (ARV) est déformée vers l'intérieur pour faire sortir l'équipement de préparation (ARV) sans aucune contre-dépouille après le transfert des composants de l'élément structurel vers l'équipement de collage-laminage (LKV).

8. Procédé selon la revendication 7, **caractérisé en ce que**
- l'équipement de préparation (ARV) qui se trouve dans la position de sortie incurvée vers le haut est garni au moins des composants de l'élément réalisés sous forme de lisses (8) et d'adjuvants (9),
- l'équipement de préparation (ARV) garni est ensuite évacué et retourné de manière à arriver dans une position de travail incurvée vers le bas.
